# EUROPÄISCHE PATENTSCHRIFT

(11) **EP 1 591 602 B1**
(45) Veröffentlichungstag und Bekanntmachung des Hinweises auf die Patenterteilung: **03.06.2009**
(21) Anmeldenummer: 04010049.7
(22) Anmeldetag: 28.04.2004
(51) Int. Cl.: E04F 13/08

(54) **Befestigungssystem für Bauteile an einer Wand**
System for fastening components to a wall
Système pour fixer des éléments de construction sur un mur

(43) Veröffentlichungstag der Anmeldung: 02.11.2005
(73) Patentinhaber: RANIT-Befestigungssysteme GmbH, 45701 Herten (DE)
(72) Erfinder: Gräwe, Bernd, 45701 Herten (DE)
(74) Vertreter: Grosse, Wolf-Dietrich Rüdiger

(56) Entgegenhaltungen:
- EP-A- 0 644 301
- WO-A-90/15206
- WO-A-03/016725
- DE-A- 3 825 082
- DE-A- 4 319 055
- DE-C- 19 801 548
- DE-U- 7 807 519
- DE-U- 20 313 909

## Beschreibung

Die Erfindung betrifft ein Befestigungssystem für Bauteile an einer Wand, umfassend ein Hülsenteil mit einem Halteteller und einem Haltetellerschaft, ein in eine Durchgangsbohrung mit seinem Kopf bis zu einer Endposition im Übergangsbereich zum Haltetellerschaft in das Hülsenteil einführbares und in der Wand vorankerbares Befestigungselement, wobei das Befestigungselement eine Schraube, insbesondere eine nagelbare Schraube ist, sowie einen das Befestigungselement einkammernden, in einen Gewindeabschnitt der Durchgangsbohrung einschraubbaren, eine Einschraub-Werkzeugaufnahme besitzenden Gewindestopfen.

Bei dem Befestigungselement kann es sich um eine Schraube oder einen Einschlagnagel handeln. Unter dem Begriff Wand wird neben Fassadenwänden auch jede Art von Unterkonstruktion verstanden, auf die Bauteile, insbesondere Leichtbauteile, wie Schaumstoffkörper und wärme- bzw. schallisolierende Materialien, in Form von Platten, Panelen, Leisten etc. montiert werden.

Derartige Befestigungssysteme finden insbesondere Verwendung zur Montage von Wärmedämm-Verbundsystemen auf Putzbasis zur Isolation, insbesondere bei Sanierungs- oder Renovierungsmaßnahmen von Gebäuden. Hierbei wird üblicherweise eine Isolierschicht, beispielsweise aus Polystyrolplatten oder aus hochverdichteten Steinwolleplatten, auf das Mauerwerk geklebt, verdübelt sowie anschließend verputzt.

Ein Befestigungssystem der eingangs genannten Art ist durch das DE 203 13 909.7 U bekannt geworden. Durch den in das Hülsenteil eingeschraubten Gewindestopfen werden die geforderten Isolationswerte bzw. der geforderte Korrosionsschutz erreicht und für den Einsatzzeitraum gewährleistet. Denn bei solchen Befestigungssystemen bzw. Isolierplattendübeln spielt die Isolierung des Spreizelementes unter Beachtung von geringen Wärmedurchgangswerten eine wesentliche Rolle, so dass es gilt, Kälte- oder Wärmebrücken durch das Spreizelement zu vermeiden. Hierzu ist es aus der DE 198 01 548 C1 bekannt, anstelle eines Befestigungssystems mit einem abgedichteten Gewindestopfen eine Schraube mit einem großen Kunststoffkopf durch Umspritzen zu versehen. Ein solches Umspritzen ist aber sehr aufwendig und verteuert das Produkt.

Bei dem bekannten System mit einschraubbarem Gewindestopfen wird üblich eine nagelbare Schraube oder eine Schraube als Befestigungselement über den Stopfen und Halteteller eingeschlagen. Die Einschlagschraube bzw. Schraube kann dabei einen Dübel spreizen oder ohne einen solchen montiert werden. Das bekannte System erlaubt zwar eine Montage, bei der vor Ort eine durch die Bohrung des Hülsenteils hindurch gesteckte Schraube bei noch nicht eingeschraubtem Gewindestopfen unter Zuhilfenahme beispielsweise eines Schraubenziehers in den Untergrund (Holz oder dergleichen) eingeschraubt werden kann, jedoch muß anschließend noch der Gewindestopfen eingeschraubt werden, so dass kein von vornherein zur Endmontage bereits völlig vorgefertigtes Befestigungssystem zum Einsatz kommen kann.

Aus der WO 9015206 A1 ist ein Befestigungssystem bekannt, bei dem der Kopf des Befestigungselementes mehrkantig ausgebildet ist und in der Endposition des Befestigungselementes in dem Hülsenteil eine zu der Außenkontur des Kopfes komplementäre Ausnehmung vorgesehen ist.

Durch die DE 38 25 082 A1 ist zur Dachisolierung die Befestigung mittels eines in einem Spannrohr aufgenommenen Schraubenbolzens bekannt geworden. Das Spannrohr ist mit einer Verdrehsicherung gegenüber dem Schraubenbolzen ausgebildet.

Die WO 03016725 A1 beschreibt die Befestigung eines lsolierplattendübels, der beim Setzen an einer Solltrennstelle in zwei Teile getrennt wird, und zwar nach dem Herausziehen eines zur Montage verwendeten Bohrers.

Durch die DE 43 19 055 A1 ist ein mit einer unverlierbaren Schraube vormontierter Kunststoffhalter bekannt geworden.

Zur Fixierung einer Wärmedämmplatte auf einer Unterlage ist aus dem DE 78 07519 U ein Befestigungsmittel bekannt, das einen dreh- und verschiebungssicher in einem Schaft angeordneten Schraubenkopf aufweist. Ein an den Schaft angeformter Teller ist mit Angriffsmitteln für Werkzeuge zum Aufbringen eines Drehmomentes ausgebildet.

Durch die EP 0 644 301 B1 ist ein Dämmstoffhalter bekannt geworden, der einen Halteteller mit Schaft aufweist, der durch Umspritzen oder durch Eindrehen in eine verengte Sacklochbohrung mit einer Stiftschraube versehen ist. Zum Einschrauben in den Untergrund, z.B. Bohrloch eines Mauerwerkes, besitzt der Halteteller eine Werkzeugaufnahme, die den Bohrer zum Herstellen des Bohrloches aufnehmen kann, so dass sich der Dämmstoffhalter maschinell mit der Bohrmaschine befestigen läßt.

Der Erfindung liegt die Aufgabe zugrunde, ein gattungsgemäßes Befestigungssystem derart weiterzuentwickeln, daß es als bereits einheitlich vorgefertigte Montageeinheit eingeschraubt werden kann.

Diese Aufgabe wird erfindungsgemäß dadurch gelöst, dass der Kopf des Befestigungselementes mehrkantig ausgebildet ist und in der Endposition des Befestigungselementes in dem Hülsenteil eine zu der Außenkontur des Kopfes des Befestigungselementes komplementäre Ausnehmung vorgesehen ist, und dass am unteren Ende des Gewindeabschnitts, oberhalb der Kopf- Ausnehmung im Hülsenteil Rastelemente vorgesehen sind, die mit Gegenrastmitteln des Gewindestopfens zusammenwirken. Wenn die Kopfplatte bzw. der Halteteller des Hülsenteils auf die Isolierung trifft, erhöht sich das Drehmoment und die Rutschkupplung dreht durch. Ein zu tiefes Einziehen der Kopfplatte des Haltetellers und Zerstören der Isolierungsmatte wird damit verhindert.

Es kann damit sogleich berücksichtigt werden, ob das erfindungsgemäße Befestigungssystem mit Schraube in einen Dübel oder beispielsweise auch direkt in Holz geschraubt wird. Die vorgenannten Maßnahmen ermöglichen es, entsprechend den sich damit einstellenden unterschiedlichen Drehmomenten das Drehmoment zum Versagen mehr oder weniger zu erhöhen. Dies kann so weit führen, dass beispielsweise die Rast-Vorsprünge abgeschert werden, wobei die Gewindegänge aber stets ohne Beschädigung bleiben. Außerdem lässt sich verhindern, dass sich das Befestigungssystem unnötig tief in das Isoliermaterial einzieht. Denn das lässt sich wirksam durch das Auslösen der Wirkung als Rutschkupplung vermeiden.

Zum Montieren durch Einschlagen wird das Befestigungssystem mit einer nagelbaren Schraube vorgefertigt, die von dem eingeschraubten Gewindestopfen mit seinem Kopf in der mehrkantigen Ausnehmung der Endposition fixiert wird, so dass sich das Befestigungssystem durch Schläge auf den Halteteller und Gewindestopfenkopf eintreiben lässt. Vor allem dann, wenn Isolationsmaterialien mit großer Dicke, z.B. 200 bis 300 mm vorliegen, was entsprechend lange Nägel voraussetzt, besteht die Gefahr, dass der Nagel krumm geschlagen wird, und die Verwendung von gehärteten Nägeln ist sehr teuer, Es lässt sich damit in einfacher Weise das erfindungsgemäße Befestigungssystem vorgefertigt mit einer Schraube verwenden. Denn es wird ein Einschrauben im montierten Zustand erreicht, weil sich die über den Gewindestopfen eingeleitete Einschraubbewegung über den drehfest in der Ausnehmung festgelegten mehrkantigen zumindest ovalen Kopf der Schraube auf das gesamte Hülsenteil und damit die Schraube überträgt. Das gilt gleichermaßen beim Einsatz von Blechtreibschrauben, selbstbohrenden Blechschrauben oder dergleichen schraubbaren Befestigungsmitteln.

Eine Ausgestaltung der Erfindung sieht Vorsprünge als Rastelemente und diesen zugeordnete Auskerbungen des Gewindestopfens als Gegenrastmittel vor. Hierdurch lässt sich die Funktion einer Rutschkupplung weiter begünstigen bzw. beeinflussen.

Nach einem Vorschlag der Erfindung ist zumindest der Gewindeabschnitt des Hülsenteils mit einem Rundgewinde ausgeführt. Damit lässt sich eine Beschädigung des Gewindes im Hülsenteil und/oder am Gewindestopfen vermeiden, denn sobald durch Aufliegen des Haltetellers ein zu hohes Drehmoment auftritt, dreht der Gewindestopfen durch. Eine Zerstörung der Gewindegänge wird vermieden. Das Drehmoment zum Versagen, d.h. Durchrutschen des Gewindestopfens, kann hierbei durch die Auswahl verschiedener Kunststoffe beeinflusst werden. So kann ein harter Kunststoff, z.B. Glasfaser verstärktes Polyamid 6.6 für den Gewindestopfen, und ein weicheres Material, z.B. Polyamid 6.0 unverstärkt, für das Hülsentell zur Anwendung kommen.

Ein weiterer besonderer Vorteil des erfindungsgemäßen Befestigungssystems lässt sich erreichen, wenn der Kopf des Befestigungselementes mit einer Werkzeugaufnahme, z. B. Mehrkant- oder Kreuzschlitz, ausgeführt ist, weil dann auch eine einfache Demontage des Befestigungssystems möglich ist. Nach dem Herausschrauben des Gewindestopfens kann nämlich in einfacher Weise auch die Schraube aus ihrem Montagesitz herausgedreht werden.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: in einem Teillängsschnitt eine Gesamtansicht einer vorgefertigten Einheit eines Befestigungssystems mit einem Dübel zur Wandverankerung;
- Fig. 2: in einem Teillängsschnitt eine Gesamtansicht einer vorgefertigten Einheit eines Befestigungssystems mit einer Holzschraube;
- Fig. 3: als Einzelheit der Befestigungssysteme nach den Fig. 1 und 2 im Längsschnitt deren Hülsenteil, ohne eingeschraubten Gewindestopfen dargestellt;
- Fig. 4: als Einzelheit einen Gewindestopfen des Hülsenteils, in zwei verschiedenen Gesamtansichten sowie als Draufsicht (unten rechts) und als Ansicht von unten (oben links) dargestellt;
- Fig. 5: das Hülsenteil nach Fig. 3 in der Draufsicht;
- Fig. 6: eine andere Ausführung eines der Darstellung nach Fig. 3 entsprechenden Hülsenteils;
- Fig. 7: eine andere Ausführung eines der Darstellung nach Fig. 4 entsprechenden Gewindestopfens;
- Fig. 8: ein innerhalb eines Wärmedämm-Verbundsystems in einer Wandbohrung montiertes Befestigungssystem nach Fig. 1; und
- Fig. 9: ein innerhalb eines Wärmedämm-Verbundsystems auf einer Holzkonstruktion montiertes Befestigungssystem nach Fig. 2.

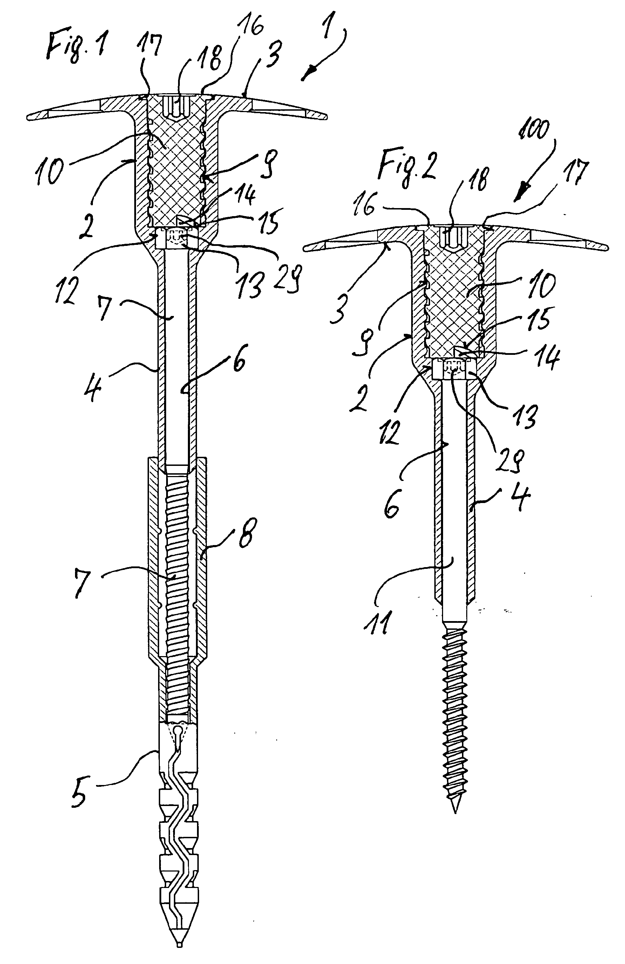

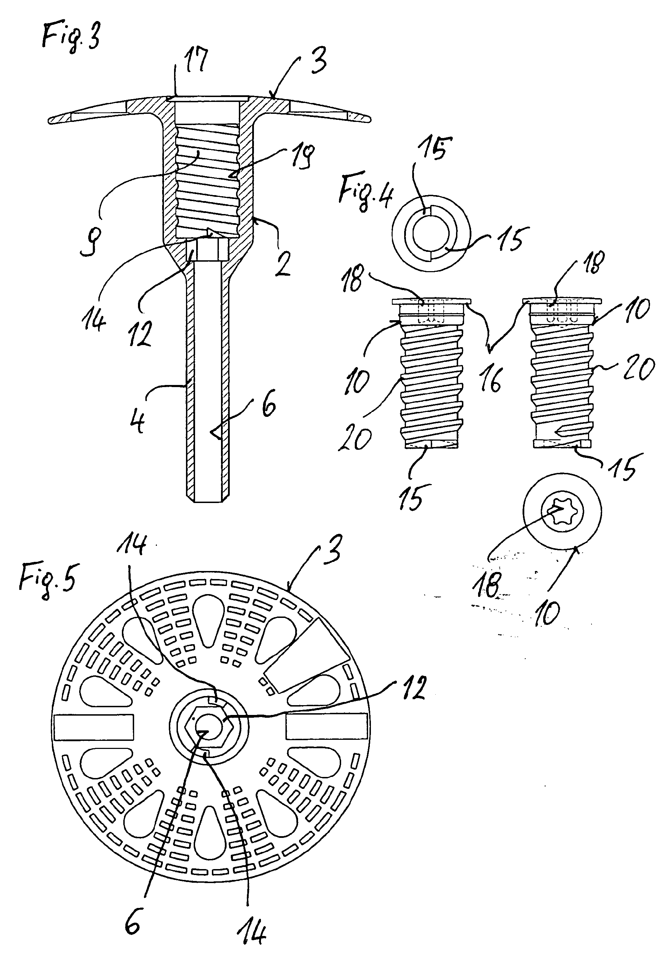

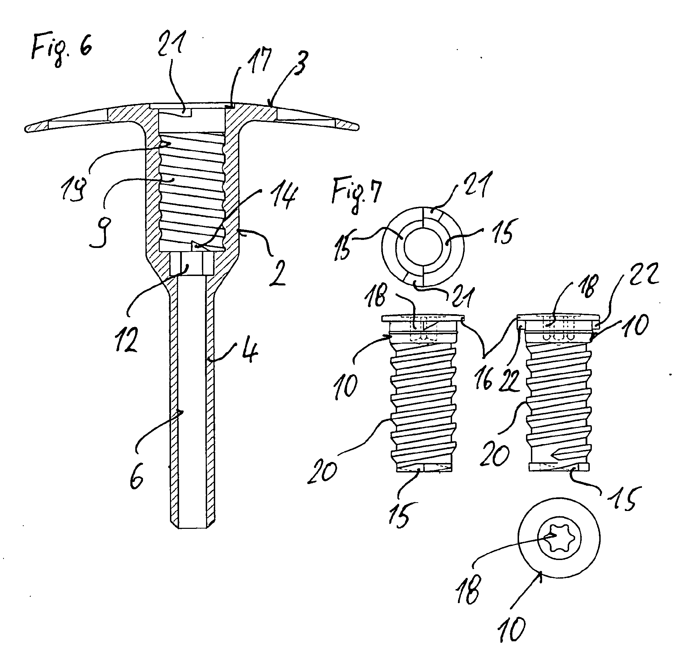

Ein in Fig. 1 dargestelltes, zum Einsatz als komplette Baueinheit vollständig vorgefertigtes Befestigungssystem 1 setzt sich aus einem Hülsenteil 2, das einen Halteteller 3 und einen Haltetellerschaft 4 besitzt, und einem Dübel 5 sowie einer in einer Durchgangsbohrung 6 des Hülsenteils 2 angeordneten, bis in den Dübel 5 reichenden nagelbaren Schraube 7 als Befestigungselement zusammen. Der Haltetellerschaft 4 taucht in einen Schaft 8 des Dübels ein, so dass das Hülsenteil im Dübelschaft 8 verschiebbar bzw. teleskopierbar ist, was eine einfache Anpassung an unterschiedliche zu befestigende Materialien oder Unterkonstruktionen ermöglicht. Zu dem Befestigungssystem gehört weiterhin ein in einen Gewindeabschnitt 9 (vgl. auch die Fig. 3 und 6) der Durchgangsbohrung 6 des Hülsenteils 2 eingeschraubter Gewindestopfen 10.

Die Ausführung eines in Fig. 2 dargestellten Befestigungselementes 100 unterscheidet sich von dem Befestigungssystem 1 der Fig. 1 lediglich dadurch, dass in die Durchgangsbohrung 6 des Hülsenteils 2 zur Montage eine Holzschraube 11 gesteckt ist, die ohne Dübel befestigt und im übrigen wie die nagelbare Schraube 7 von dem abgedichtet in den Gewindeabschnitt 9 des Halteteils 2 eingeschraubten Gewindestopfen 10 nach außen völlig isoliert eingekammert wird.

Wie sich näher den Fig. 3 bis 5 bzw. 6 und 7 entnehmen lässt, wird die Schraube 7 bzw. Holzschraube 11 in einer am unteren Ende des Gewindeabschnitts 9 in dem Hülsenteil ausgebildeten Ausnehmung 12, die dem mehrkantigen Kopf 13 der Schraube 7 bzw. Holzschraube 11 formangepaßt ist, drehfest festgelegt. Auf dem Bohrungsgrund bzw. Boden des Gewindeabschnitts 9 der Durchgangsbohrung 6 sind im Hülsenteil 2 Rastelemente 14 in Form von Vorsprüngen ausgebildet, denen am vorderen Ende des Gewindestopfens 10 vorgesehene Gegenrastmittel 15 in Form von Auskerbungen (vgl. die Fig. 4 und 7) zugeordnet sind. Der Gewindestopfen 10 ist mit einem Flachkopf 16 versehen, der sich nach dem Einbau in das Befestigungssystem 1 bzw. 100 (vgl. die Fig. 1 und 2) bündig abschließend mit der Oberfläche des Haltetellers 3 in eine Halteteller-Ausdrehung 17 legt und mit einer im Ausführungsbeispiel mehrkantigen Einschraub-Werkzeugaufnahme 18 versehen ist.

Der Gewindeabschnitt 9 des Hülsenteils 2 ist als Rundgewinde 19 ausgeführt, was beim Montieren des Befestigungselementes 1 bzw. 100 Beschädigungen des Gewindeabschnitts 9 bzw. des Gewindes 20 des Gewindestopfens 10 bei einem auftretenden hohen Drehmoment vermeidet, weil der Gewindestopfen 10 dann durchdreht. Diese Wirkung nach Art einer Rutschkupplung wird durch die Rastelemente bzw. Vorsprünge 14 und Gegenrastmittel bzw. Auskerbungen 15 weiter begünstigt. Durch im Ausführungsbeispiel gemäß den Fig. 6 und 7 zusätzlich einerseits am oberen Ende des Gewindeabschnitts 9 im Halteteller 3 des Hülsenteils 2 ausgebildete Rastelemente 21 in Form von Ausnehmungen und andererseits diesen am Gewindestopfen 10 unterhalb des Flachkopfs 16 zugeordneten Rastelementen 22 in Form von Nocken wird das Durchrutschmoment weiter erhöht. Auf jeden Fall werden die Gewindegänge bei jeglicher Belastung beschädigungsfrei gehalten. Die als Nocken oder Vorsprünge ausgebildeten Rastelemente 14 bzw. 22 können gegebenenfalls sogar abscheren.

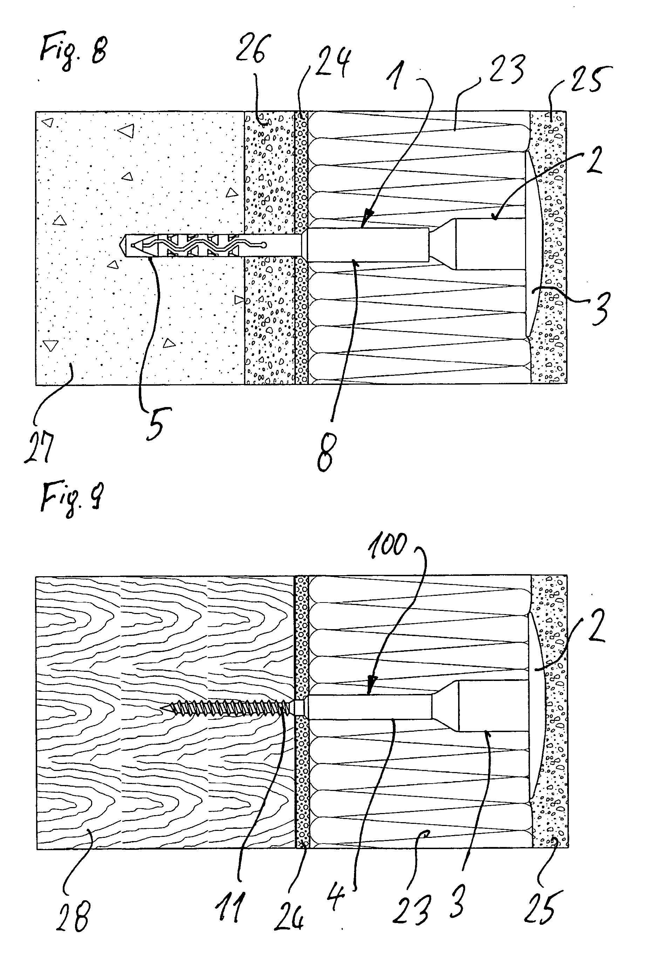

In den Fig. 8 und 9 sind Beispiele für die jeweils als komplett vorgefertigte Einheiten zum Einsatz kommenden Befestigungssysteme 1 nach Fig. 1 bzw. 100 nach Fig. 2 innerhalb eines Wärmedämm-Verbundsystems gezeigt, bei dem ein Isoliermaterial 23, eingeschlossen von einer Klebeschicht 24 und einem Außenputz 25, gemäß Fig. 8 an einer noch mit einem nicht tragenden Untergrund 26 versehenen Wand 27 in Form eines Mauerwerkes und nach Fig. 9 an einer Holzplatte 28 befestigt ist. Hierbei wurden - vor dem Auftragen des Außenputzes 25 - die Befestigungssysteme 1 bzw. 100 in vorgebohrte Löcher gesteckt und durch Einschrauben mittels eines in die Einschraub-Werkzeugaufnahme 18 des Gewindestopfens 10 im Halteteller 3 eingesteckten Werkzeugs in ihre in den Fig. 8 und 9 gezeigte Endposition geschraubt. Das aufgebrachte Drehmoment hat sich dabei auf die nagelbare Schraube 7 bzw. Holzschraube 11 über deren drehfest in den Ausnehmungen 12 des Hülsenteils 2 festgelegten Schraubenköpfe 13 bei somit insgesamt rotierender Baueinheit übertragen. Während zur Verankerung des Befestigungssystems 1 die nagelbare Schraube 7 dabei den Dübel 5 in seinem Mauerwerksloch spreizt, hat sich die Holzschraube 11 des Befestigungssystems 1 direkt in die Holzplatte 28 geschraubt.

Die beschriebenen Rutschkupplungen schließen hierbei Beschädigungen bei übermäßig groß auftretenden Drehmomenten aus und verhindern gleichzeitig ein zu tiefes Eindringen der Befestigungselemente 1 bzw.100 in das Isoliermaterial 23. Wenn außerdem im Kopf 13 der nagelbaren Schraube 7 bzw. Holzschraube 11 eine Werkzeugaufnahme 29 ausgebildet ist, wie in den Fig. 1 und 2 angedeutet, lässt sich eine einfache Demontage des Befestigungselementes 1 bzw. 100 erreichen, denn nach dem Herausschrauben des Stopfens 10 kann dann sogleich auch die nagelbare Schraube 7 bzw. Holzschraube 11 aus ihrem Montagesitz gelöst und entfernt werden. Allenfalls der Dübel 5 verbleibt an seinem Ort.

## Patentansprüche

1. Befestigungssystem (1; 100) für Bauteile (23) an einer Wand (27; 28), umfassend ein Hülsenteil (2) mit einem Halteteller (3) und einem Haltetellerschaft (4), ein in eine Durchgangsbohrung (6) mit seinem Kopf (13) bis zu einer Endposition im Übergangsbereich zum Haltetellerschaft (4) in das Hülsenteil (2) einführbares und in der Wand (27; 28) verankerbares Befestigungselement (7; 11), wobei das Befestigungselement eine Schraube, insbesondere eine nagelbare Schraube ist, sowie einen das Befestigungselement (7; 11) einkammernden, in einen Gewindeabschnitt (9) der Durchgangsbohrung (6) des Hülsenteils (2) einschraubbaren, eine Einschraub-Werkzeugaufnahme (18) besitzenden Gewindestopfen (10),
**dadurch gekennzeichnet,**
**dass** der Kopf (13) des Befestigungselementes (7; 11) mehrkantig ausgebilde ist und in der Endposition des Befestigungselementes (7; 11) in dem Hülsenteil (2) eine zu der Außenkontur des Kopfes (13) des Befestigungselementes (7; 11) komplementäre Ausnehmung (12) vorgesehen ist, und dass am unteren Ende des Gewindeabschnitts (9), oberhalb der Kopf- Ausnehmung (12) im Hülsenteil (2) Rastelemente (14) vorgesehen sind, die mit Gegenrastmitteln (15) des Gewindestopfens (10) zusammenwirken.

2. Befestigungssystem nach Anspruch 1,
**gekennzeichnet durch**
Vorsprünge als Rastelemente (14) und diesen zugeordnete Auskerbungen des Gewindestopfens (10) als Gegenrastmittel (15).

3. Befestigungssystem nach Anspruch 1 oder 2,
**dadurch gekennzeichnet,**
**dass** zumindest der Gewindeabschnitt (9) des Hülsenteils (2) mit einem Rundgewinde (19) ausgeführt ist.

4. Befestigungssystem nach einem der Ansprüche 1 bis 3,
**dadurch gekennzeichnet,**
**dass** der Kopf (13) des Befestigungselementes 7; 11) mit einer Werkzeugaufnahme (29) ausgebildet ist.

## Claims

1. A fixing system (1; 100) for components (23) on a wall (27; 28), comprising a sleeve part (2) with a retaining disc (3) and a retaining disc shaft (4), a fixing element (7; 11), which can be inserted into the sleeve part (2), into a through hole (6), until its head (13) reaches an end position in the transition region to the retaining disc shaft (4) and which can be anchored in the wall (27; 28), wherein the fixing element is a screw, particularly a nail-containing screw, as well as a thread plug (10), which encloses the fixing element (7; 11), can be screwed into a thread section (9) of the through hole (6) of the sleeve part (2) and has a screwing tool accommodation (18),
**characterized**
**in that** the head (13) of the fixing element (7; 11) is constructed polygonally and a recess (12) which is complementary to the outer contour of the head (13) of the fixing element (7; 11) is provided in the end position of the fixing element (7; 11) in the sleeve part (2), and in that locking elements (14), which interact with counterlocking means (15) of the thread plug (10), are provided at the lower end of the thread section (9), above the head recess (12) in the sleeve part (2).

2. The fixing system according to Claim 1,
**characterized by**
projections as locking elements (14) and notches of the thread plug (10) assigned to the latter as counterlocking means (15).

3. The fixing system according to Claim 1 or 2,
**characterized**
**in that** at least the thread section (9) of the sleeve part (2) is realized with a round thread (19).

4. The fixing system according to one of Claims 1 to 3,
**characterized**
**in that** the head (13) of the fixing element (7; 11) is constructed with a tool accommodation (29).

## Revendications

1. Système de fixation (1 ;100) de composants (23) sur une paroi (27 ;28), comprenant une partie de manchon (2) avec une plaquette de retenue (3) et une tige de plaquette de retenue (4), un élément de fixation (7 ;11) pouvant être inséré dans un alésage traversant (6) par sa tête (13) jusqu'à sa position finale dans la zone de transition par rapport à la tige de plaquette de retenue (4) dans la partie de manchon et pouvant être ancré dans la paroi (27 ;28), moyennant quoi l'élément de fixation est une vis, notamment une vis pouvant être clouée, ainsi qu'un bouchon fileté (10) s'engrenant dans l'élément de fixation (7 ;11), pouvant être vissé dans une portion de filetage (9) de l'alésage traversant (6) de la partie de manchon (2), possédant un réceptacle d'outil de vissage (18),
**caractérisé en ce que**
la tête (13) de l'élément de fixation (7 ;11) a une configuration polygonale et est pourvue dans la position finale de l'élément de fixation (7 ;11) dans la partie de manchon (2) d'un évidement (12) complémentaire au contour externe de la tête (13) de l'élément de fixation (7 ;11), et **en ce que** à l'extrémité inférieure de la portion de filetage (9) au dessus de l'évidement de la tête (12) dans la partie de manchon (2), des éléments de verrouillage (14) sont prévus, lesquels coopèrent avec des moyens de contre-verrouillage (15) du bouchon fileté (10).

2. Système de fixation selon la revendication 1,
**caractérisé par**
des protubérances en tant qu'éléments de verrouillage (14) et des encoches coordonnées à ceux-ci du boulon fileté (10) en tant que moyen de contre-verrouillage (15).

3. Système de fixation selon la revendication 1 ou 2,
**caractérisé en ce que**
au moins la portion de filetage (9) de la partie de manchon (2) est configurée avec un filetage rond (19).

4. Système de fixation selon une des revendications 1 à 3,
**caractérisé en ce que**
la tête (13) de l'élément de fixation (7 ;11) est configurée avec un réceptacle d'outil (29).
